# EUROPEAN PATENT APPLICATION

(11) **EP 2 868 360 A1**
(43) Date of publication of application: **06.05.2015**
(21) Application number: 14156681.0
(22) Date of filing: 26.02.2014
(51) Int. Cl.: B01D 33/073, B01D 33/46, B01D 33/50

(54) **Rotary strainer**

(30) Priority: 18.06.2013 US 201313920484
(71) Applicant: S.P. Kinney Engineers, Inc., Carnegie, PA 15106 (US)
(72) Inventor: Kinney, Craig S., Sewickley, PA 15143 (US)
(74) Representative: Grünecker Patent- und Rechtsanwälte PartG mbB

(57) **Abstract**

A continuous, self-cleaning strainer having a housing, a rotatably driven shaft mounted on the housing, a primary and a secondary drum concentrically mounted on the shaft and rotatable therewith, the drums having a number of perforations and strainer inserts mounted in each of the perforations, each drum being provided with a reduced pressure backwash assembly outside the drum and connected to a backwash outlet connected to atmospheric pressure whereby, when a strainer insert passes the reduced pressure zone, pressurized liquid inside the drum forces liquid backwardly through the insert to flush accumulated solids therefrom.

## Description

### BACKGROUND OF THE INVENTION

### 1. Field of the Invention

This invention relates to the field of straining entrained solids from liquids, and to the improvement of a strainer assembly for passing liquid material to be strained, under pressure above atmospheric, through a drum having a plurality of perforations with a corresponding number of media strainers inserted within the perforations. Entrained solids are removed from the liquid to be strained by entrapment of the solids by the media strainers as the liquid flows through the media strainers in a straining direction. The drum is rotated to a location of a backwash opening whereat the media strainers at a location in the drum opposing the backwash opening are flushed of the entrapped solids by the liquid material flowing through the media strainers in a direction opposite the straining direction.

Applications include, for example, removal of suspended particles from industrial plants, using river, lake or sea water for cooling, descaling, bearing lubrication, spraying, quenching and similar purposes. The strainer assembly can be used with supply pipeline sizes from 2 to 60 inches diameter or greater. Liquids other than water, for example, acids and other chemicals, paper mill "white water", sewage and coke plant ammonia flushing liquors can also be effectively strained.

### 2. Description of Related Art

U.S. Patent No. 5,312,544, titled Continuous Strainer, teaches a strainer assembly having many components included in the strainer assembly of the present application. However, the present invention includes improvements which greatly facilitate servicing of wearable components of the strainer assembly. Features of the present invention provide a long service life for the strainer assembly, and enable replacement of wearable components in the field, thus minimizing servicing time and improving productivity.

### SUMMARY OF THE INVENTION

A strainer for removing entrained solids from a liquid, having a housing with an inlet for liquid to be strained and an outlet for strained liquid; a vertical drive shaft extending through the housing with means to rotatably drive the drive shaft; a drum, rotatable with the drive shaft, the drum having a plurality of perforations, each perforation for mounting a media strainer for straining the liquid; means to introduce the liquid, under pressure, through the housing inlet to a space between the inside of the housing and the outside of the drum, and further through the media strainers to the inside of the drum and out the housing outlet, the entrained solids being entrapped in the media strainers; the improvement being:

At least one backwash opening is provided through the housing, arranged such that as the drum rotates selected media strainers to be flushed oppose the backwash opening, the removable backwash assembly has a backwash plate removably attached to an outside surface of the housing, the backwash plate surrounding the backwash opening and having a flushing opening communicating with the backwash opening; a backwash outlet pipe affixed to an outer surface of the backwash plate, the backwash outlet pipe communicating with the flushing opening and communicating with a reduced pressure line and a slide strip having a central opening, the slide strip being arranged to slidably bear on the outside of the drum. The selected media strainers to be flushed are exposed in the central opening, and slot plates affixed to an inner surface of the backwash plate form a sealed connection between the central opening and the flushing opening, whereby the liquid from inside of the drum flows through the selected media strainers to be flushed in a direction toward the backwash opening to flush the solids entrapped therein through the backwash opening and removable backwash assembly to the reduced pressure line.

### BRIEF DESCRIPTION OF THE DRAWINGS

FIG. 1 is an elevational view of the strainer assembly of the invention;
FIG. 2 is a top view of the strainer assembly of the invention;
FIG. 3 is a cross-sectional side view of the strainer assembly taken along line 3-3 of FIG. 2;
FIG. 4 is an elevational view of the strainer assembly of the invention with the removable backwash assembly removed;
FIG. 5a is a cross-sectional side view of the strainer assembly taken along section line 5-5 of FIG. 2, with the removable backwash assembly removed ;
FIG. 5b is a cross-sectional side view of the strainer assembly taken along section line 5-5 of FIG. 2, with the removable backwash assembly in place;
FIG. 6 is a cross-sectional top view of the strainer assembly taken along section line 6-6 of FIGS. 5a and 5b;
FIG. 7 is a cross-sectional side view of the removable backwash assembly of the invention taken along section line 5-5 of FIG. 2;
FIG. 8 is a front view of the removable backwash assembly of the invention;
FIG. 9 is a top view of the removable backwash assembly of the invention; and
FIG. 10 is a top view of the body separating ring of the invention.

### DESCRIPTION OF PREFERRED EMBODIMENTS OF THE INVENTION

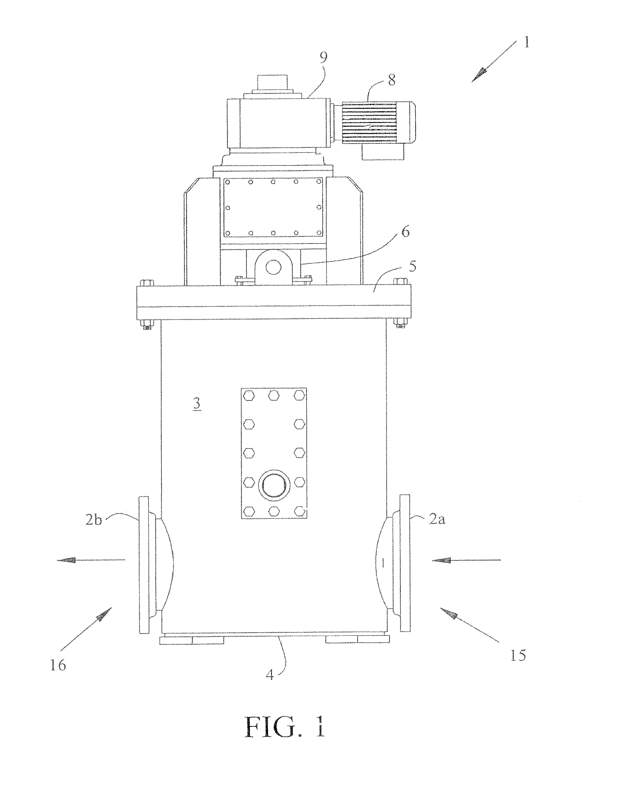

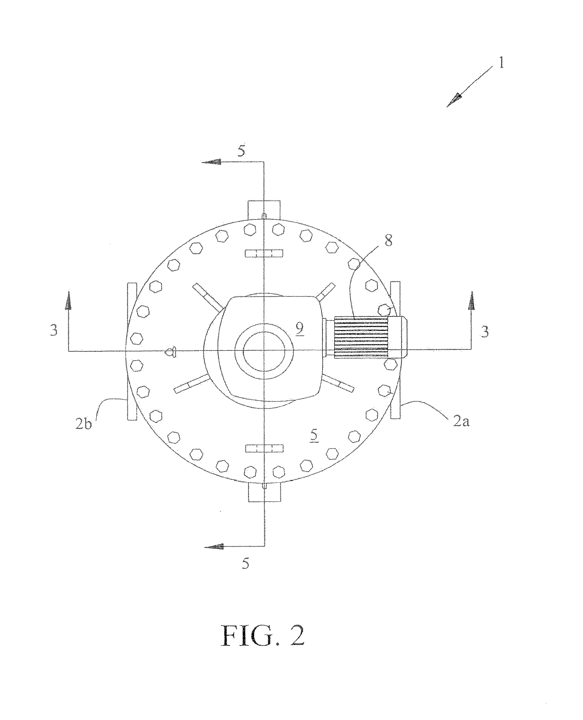

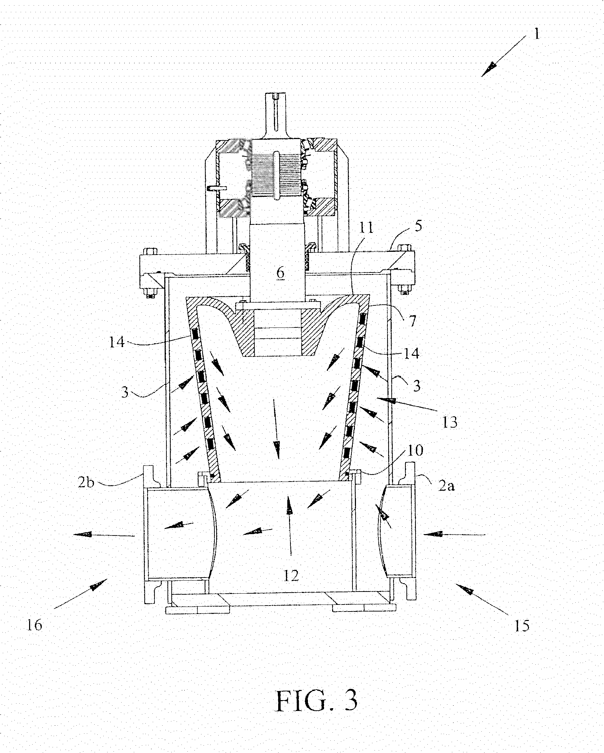

FIGS. 1 and 2 show an elevational view and a top view, respectively, of a strainer assembly 1 of the invention. On the strainer assembly 1, flanges 2a and 2b are provided for inserting the strainer assembly into a piping system having a liquid to be strained. The strainer assembly has a housing 3 with a closed bottom 4 and a removable head 5. As shown in FIG. 3 a drive shaft 6 extends downward through head 5 to rotate drum 7. The shaft is rotated by motor 8 through gear reducers 9. Although not shown or discussed in detail, bearings and seals are provided in the head for rotatably holding shaft 6 in place and for preventing the liquid to be strained, which is at a pressure above atmospheric pressure, from leaking from the strainer assembly. The lower end of drum 7 is rotatably supported on body separating ring 10, discussed below.

Drum 7 has a closed top 11, an open bottom 12, and a plurality of threaded perforations 13. Mounted within the threaded perforations 13 is a set of threaded media strainers 14.

In operation, liquid to be strained enters the strainer assembly through inlet 15 and after being strained, exits the strainer assembly through outlet 16. More specifically, the liquid to be strained enters inlet 15 and flows between housing 3 and drum 7. The liquid to be strained is at a pressure above atmospheric pressure, and preferably greater than 20 psi. The liquid to be strained passes through media strainers 14 where solids entrained in the liquid are trapped and retained. The direction of flow is from outside the drum 7 to the interior of the drum, as shown by arrows in FIG. 3. The strained liquid continues through the open bottom 12 of the drum to outlet 16.

Media strainers best suited for the liquid to be strained and the solids expected to be strained out can be selected from a large variety of media strainers having various shapes and sizes of openings. The media strainers all have an outer surface with threads of a size to correspond to the threaded perforations 13 in the drum.

The strainer assembly of the invention is configured to operate continuously and is provided with a backwash system to either continually or periodically remove the solids that are retained in the media strainers 14. Removal of the solids is carried out while still maintaining the straining operation.

Improvements to the strainer assembly include a removable backwash assembly and a removable body separating ring which enable servicing of the strainer assembly without removal from the piping, to and from the strainer assembly.

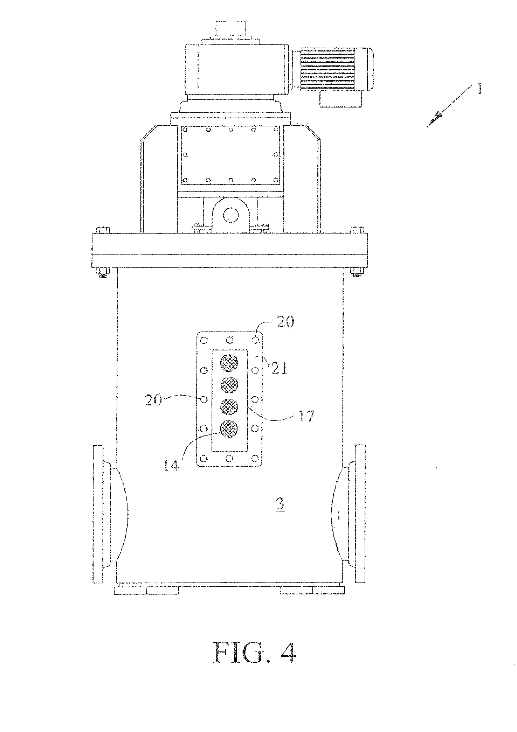

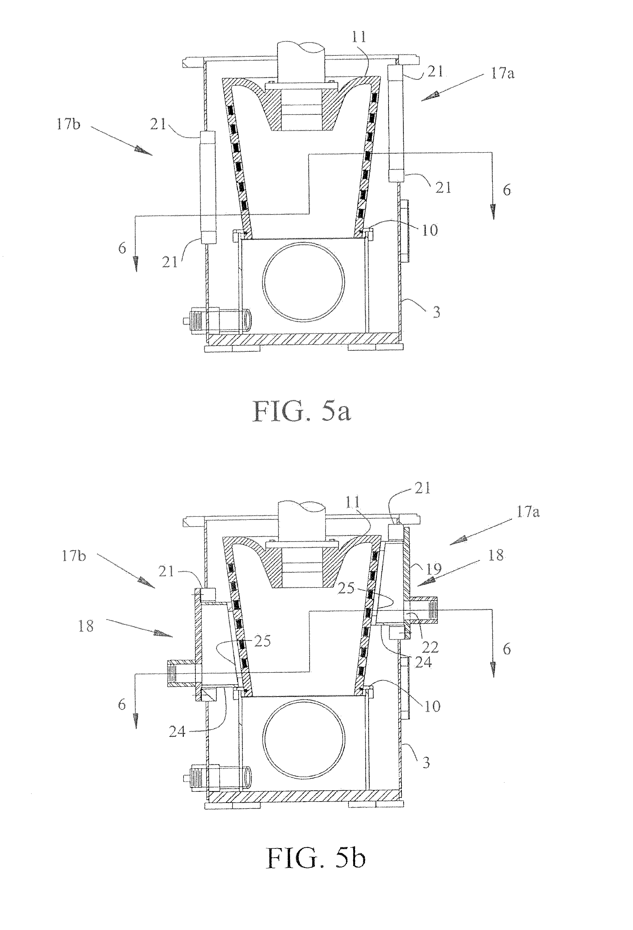

Referring to FIG. 4, the backwash system 1 includes at least one housing opening 17 in the housing 3, arranged such that the media strainers 14 in the drum 7 oppose the housing opening. In a preferred embodiment, as shown in FIG. 5a and 5b, two housing openings 17a and 17b are provided in housing 3. With this arrangement media strainers disposed in an upper portion of the drum can be backwashed through housing opening 17a and media strainers disposed in a lower portion of the drum can be backwashed through housing opening 17b.

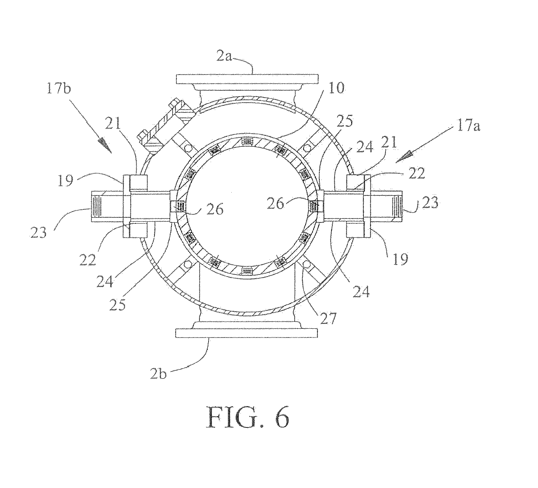

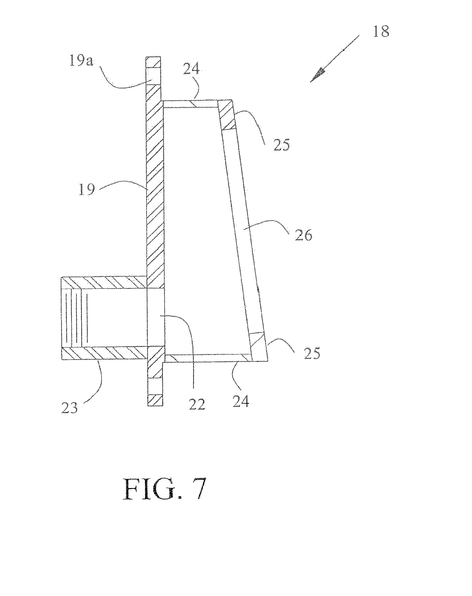

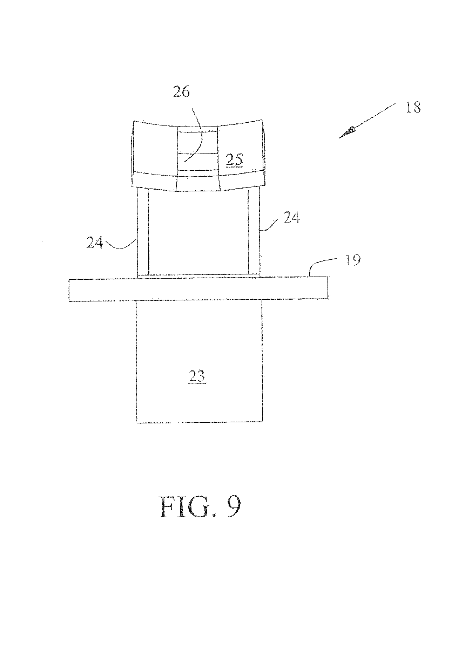

Referring to FIGS. 5b, 6, 7, 8 and 9, the backwash process is described. In each of the housing openings 17 a removable backwash assembly 18 is installed. FIGS. 7, 8 and 9 show the removable backwash assembly in a sectional side view, a front view and a top view , respectively. FIGS. 5b and 6 show the removable backwash assembly installed in opening 3 in a sectional side view and a sectional top view, respectively.

The removable backwash assembly 18 (FIG. 7) includes a backwash plate 19 that is removably attached to housing 3, preferably with fasteners such as bolts inserted through openings 19a in the backwash plate and then into threaded cavities 20 provided in mounting frame 21 (FIG. 4), which surrounds housing opening 17. The mounting frame 21 can be provided by welding a plate to the housing 3 or providing a mounting frame on a housing that is cast. Although not shown, a gasket of rubber, or the like, is preferably disposed between the removable backwash assembly 18 and the mounting frame 21.

As shown in FIG. 5b, the backwash plate at housing opening 17a is used for flushing media strainers on an upper portion of drum 7 and the backwash plate at housing opening 17b is used for flushing media strainers on a lower portion of drum 7.

The backwash plate 19 includes a flushing opening 22 through which flushed solids are removed from the strainer assembly. Preferably a backwash outlet pipe 23 communicates with flushing opening 22 in order that the flushed solids can be piped for disposal.

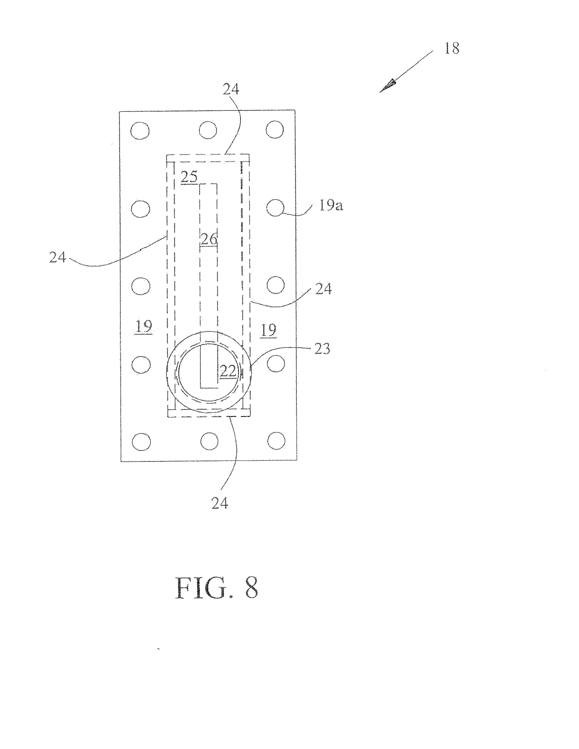

On a face of the backwash plate, opposite to that on which the backwash outlet pipe is disposed, slot plates 24 are disposed to form a sealed connection that communicates with flushing opening 22. As best shown in FIG. 8 by dashed lines, the slot plates 24 are connected to each other so as to form a connection that is sealed completely around a periphery thereof.

At ends of the slot plates 24, opposite those connected to the backwash plate 19, a slide strip 25, having a central opening 26, is disposed. As best shown in FIGS. 5a and 6 the slide strip 25 is contoured on a face thereof to match the contour of drum 7 at the portion of the drum on which the slide plate contacts and slides on the drum.

The removable backwash assembly 18, has the backwash plate 19, backwash outlet pipe 23, slot plates 24 and slide strip 25 to provide a watertight enclosure leading from slide strip central opening 26 to the end of outlet pipe 23.

Dimensions of the removable backwash assembly are such that when it is mounted on the mounting frame 21 of the housing, the contoured face of slide strip 25 fully contacts and slides on the drum. The slide strip central opening is dimensioned to encompass the media strainers to be flushed by the removable backwash assembly. For example, referring to FIGS. 5b and 6, the housing opening 17a provides flushing for four media strainers. FIG. 6 shows that one row of media strainers 14, which are aligned in a vertical direction, are encompassed by the slide strip central opening 26, and FIG. 5b shows that four rows of media strainers 14, which are aligned in a horizontal direction, are encompassed by the slide strip central opening. Placement of the media strainers in vertically and horizontally oriented rows facilitates encompassing the media strainers with the slide strip central opening, however such alignment is not required in practice of the invention. All of the media strainers of the drum can be flushed of any entrapped solids by rotating the drum with motor 8. The apparatus of the invention is not operated as a centrifuge. Rotation of the drum is at a relatively low speed, typically about 8 to 14 rpm.

When a predetermined number of media strainers are encompassed by the slide strip central opening, pressure of the liquid to be strained is greater than atmospheric pressure at the slide strip central opening and liquid in the interior of the drum flows outward through the media strainers to flush out any entrapped solids. If flushing is to be terminated, a valve (not shown), downstream of the backwash outlet pipe 23 can be closed in order to stop the flow of liquid out of the interior of the drum and through the media strainers. When in this condition, straining of the liquid to be strained still continues as the normal conditions causing the liquid to be strained to flow inward through the media strainers is not changed.

Use of the removable backwash assembly, which is removably attached to the housing, enables efficient servicing of portions of the strainer assembly without removal of the head or closed bottom of the housing or even complete removal of the strainer assembly from the piping installation.

Another feature of the strainer assemble of the invention is body separating ring 10, shown in FIGS. 3, 5a, 5b, 6 and 10. As mentioned above, drum 7 is rotatably supported on body separating ring 10 which in turn is supported by a portion of the housing 3. Rotation of drum 7 on body separating ring 10, over a period of time, causes wear on the drum 7 and body separating ring 10. In previous strainer assemblies a drum supporting surface, similar to that of the present body separating ring, was cast or otherwise permanently provided in the housing. Repair of the drum supporting surface, in most cases, required removal of the strainer assembly from the piping system and machining, or the like, of the housing, Use of a strainer assembly having the present body separating ring 10 enables replacement of the supporting surface for the drum 7 by solely removing the head and the drum

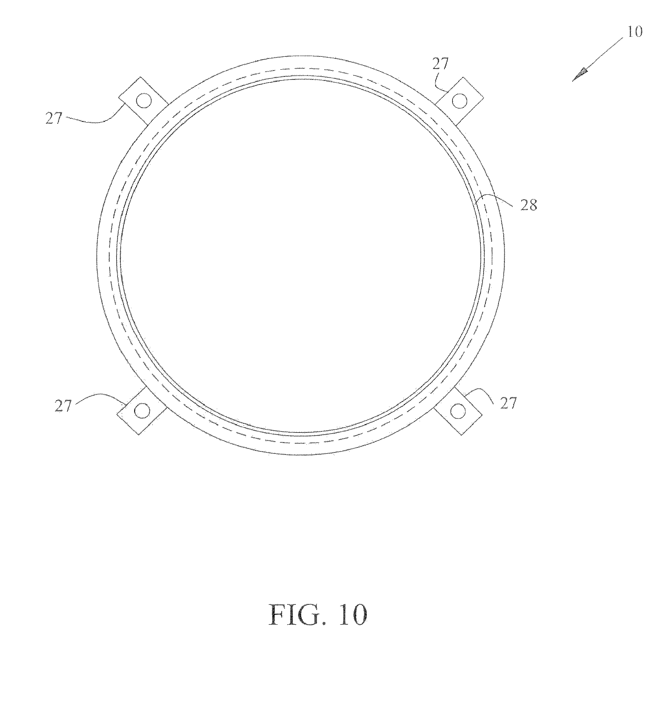

FIG. 10 shows a top view of the body separating ring 10 of the invention. The body separating ring preferably includes four tabs 27, equally spaced around the perimeter, for mounting the body separating ring to the housing, as shown in FIG. 10. Preferably threaded cavities are provided in the housing for use in securing the tabs. An inclined surface, indicated at 28 in FIG. 10, provides the support surface on which drum 7 is rotatably supported. As shown in FIGS. 3, 5a and 5b, drum 7 is preferably tapered and the inclined surface of the body separating ring 10 has the same angle of inclination as the angle of taper of the drum 7 being supported. Use of the body separating ring greatly facilitates servicing of the strainer assembly.

## Claims

1. In a strainer assembly for removing entrained solids from a liquid, the strainer having a housing with an inlet for liquid to be strained and an outlet for strained liquid; a vertical drive shaft extending through the housing with means to rotatably drive the drive shaft; a drum, rotatable with the drive shaft, the drum having a plurality of perforations, each perforation for mounting a media strainer for straining the liquid; means to introduce the liquid, under pressure, through the housing inlet to a space between the inside of the housing and the outside of the drum, and further through the media strainers to the inside of the drum and out the housing outlet, with entrained solids being entrapped in the media strainers; the improvement comprising:
at least one backwash opening through the housing, arranged such that, as the drum rotates, selected media strainers to be flushed oppose the backwash opening,
a removable backwash assembly comprising
a backwash plate removably attached to an outside surface of the housing, the backwash plate surrounding the backwash opening and having a flushing opening communicating with the backwash opening;
a backwash outlet pipe affixed to an outer surface of the backwash plate, the backwash outlet pipe communicating with the flushing opening and communicating with a reduced pressure line;
a slide strip having a central opening, the slide strip being arranged to slidably bear on the outside of the drum, the selected media strainers to be flushed arranged to be exposed in the central opening; and
slot plates affixed to an inner surface of the backwash plate to form a sealed connection between the central opening and the flushing opening, whereby the liquid from inside of the drum flows through the selected media strainers to be flushed in a direction toward the backwash opening to flush the solids entrapped therein through the backwash opening and removable backwash assembly to the reduced pressure line.

2. The strainer assembly as defined in Claim 1, wherein two backwash openings, each having a backwash assembly, are provided, one provided adjacent the upper area of the drum and another adjacent the lower area of the drum.

3. The strainer assembly as defined in Claim 1, wherein the slot plates forming the sealed connection comprise four slot plates connected to each other to form a connection that is sealed completely around a periphery of the flushing opening.

4. The strainer assembly as defined in Claim 1, wherein the slide strip has a central opening and is contoured on a face thereof to match the contour of the drum.

5. The strainer assembly as defined in Claim 4, wherein when the removable backwash assembly is mounted on the frame of the housing, the contoured face fully contacts and slides on the drum.

6. The strainer assembly as defined in Claim 5, wherein the central opening of the slide strip is dimensioned to encompass a predetermined number of media strainers to be flushed by the backwash assembly.

7. The strainer assembly as defined in Claim 1, wherein a body separating ring is removable mounted between the drum and the housing.

8. The strainer assembly as defined in Claim 7, wherein the body separating ring has an inclined support surface for supporting the drum for rotating.

9. In a strainer assembly for removing entrained solids from a liquid, the strainer having a housing with an inlet for liquid to be strained and an outlet for strained liquid; a vertical drive shaft extending through the housing with means to rotatably drive the drive shaft; a drum, rotatable with the drive shaft, the drum having a plurality of perforations, each perforation for mounting a media strainer for straining the liquid; means to introduce the liquid, under pressure, through the housing inlet to a space between the inside of the housing and the outside of the drum, and further through the media strainers to the inside of the drum and out the housing outlet, with entrained solids being entrapped in the media strainers; the improvement comprising:
at least one backwash opening through the housing, arranged such that, as the drum rotates, selected media strainers to be flushed oppose the backwash opening,
a removable backwash assembly comprising
a backwash plate removably attached to an outside surface of the housing, the backwash plate surrounding the backwash opening and having a flushing opening communicating with the backwash opening;
a backwash outlet pipe affixed to an outer surface of the backwash plate, the backwash outlet pipe communicating with the flushing opening and communicating with a reduced pressure line;
a slide strip having a central opening, the slide strip being arranged to slidably bear on the outside of the drum, the selected media strainers to be flushed arranged to be exposed in the central opening; and
slot plates affixed to an inner surface of the backwash plate to form a sealed connection between the central opening and the flushing opening, whereby the liquid from inside of the drum flows through the selected media strainers to be flushed in a direction toward the backwash opening to flush the solids entrapped therein through the backwash opening and removable backwash assembly to the reduced pressure line, wherein
two backwash openings, each having a backwash assembly, are provided, one provided adjacent the upper area of the drum and another adjacent the lower area of the drum,
the slot plates forming the sealed connection comprise four slot plates connected to each other to form a connection that is sealed completely around a periphery of the flushing opening, and
the slide strip has a central opening and is contoured on a face thereof to match the contour of the drum.
